**Europäisches Patentamt**

**European Patent Office**

**Office européen des brevets**

(19)

(11) Publication number: **0 190 004**
**A2**

(12) # EUROPEAN PATENT APPLICATION

(21) Application number: **86300420.6**

(22) Date of filing: **22.01.86**

(51) Int. Cl.⁴: **G 05 D 23/20**
**F 24 C 7/08**

(30) Priority: **26.01.85 GB 8501984**

(43) Date of publication of application:
**06.08.86 Bulletin 86/32**

(84) Designated Contracting States:
**DE FR GB NL**

(71) Applicant: **TI (Group Services) Limited**
**Five Ways**
**Birmingham B16 8SQ(GB)**

(72) Inventor: **Coppin, Julian**
**10 Millers Road**
**Toft Cambridge(GB)**

(72) Inventor: **Wilson, Donald Malcolm**
**11 Crossways**
**Linton Cambridge(GB)**

(54) **Temperature control apparatus.**

(57) Apparatus for controlling the temperature of an object, for example a pan (9) on a hotplate (10), has a temperature sensor (12). The rate of flow of heat from the hotplate to the pan is controllable and when the pan approaches the desired temperature the rate of flow of heat is reduced.

The reduction in the rate of flow of heat normally takes effect when the pan temperature is within a selected temperature difference between the pan and a predetermined temperature of the pan so that the pan heats up more slowly as it reaches the predetermined temperature. The selected temperature difference depends on the rate of increase of temperature of the pan during heating.

The apparatus can also be used during cooling to a predetermined temperature and with gas appliances.

Croydon Printing Company Ltd.

## TEMPERATURE CONTROL APPARATUS

This invention relates to apparatus for controlling the temperature of an object and is applicable to the supply of heat to an object from a heat source or the removal of heat from the object to a heat sink, as in refrigeration, in order to bring the temperature of the object to a predetermined value.

One typical example of a known temperature control system is an electric hotplate used to heat a pan. It is known to attempt to control the temperature of the pan and its contents by providing a temperature sensor, which is spring loaded into contact with the base of the pan, and which emits a signal to turn off the electric current to the hotplate when the pan reaches a required temperature previously set into the control system. When the pan temperature falls to a value slightly below the required temperature the controller switches the current on again.

It has been found that such simple systems frequently fail to control the temperature of the pan and its contents within an acceptable range. For example, it has been found that where the previously set required temperature was $180^{\circ}$C the temperature of the pan and its contents varied either side of that temperature through a total range of approximately $70^{\circ}$C.

According to the invention, apparatus for controlling the temperature of an object comprises a temperature sensor for sensing the temperature of the object, the sensor emitting a signal corresponding to the temperature of the object, heat flow means for transmitting heat to or from the object at a variable rate, and control means for controlling the flow of heat to or from the heat flow means in response to the signal from the temperature sensor, the control means being arranged to control the flow of heat to or from the object between an initial temperature of the object and a predetermined temperature of the object, characterised in that the control means is arranged to reduce the rate of flow of heat to or from the object as the temperature of the object approaches said predetermined temperature by reducing the rate of flow of heat from the heat flow means.

Preferably the control means is arranged to reduce the rate of flow of heat when the temperature of the object is taken to within a selected temperature difference of said predetermined temperature.

Conveniently the selected temperature difference is an amount which depends on the rate of change of temperature of the object during flow of heat to or from the object.

In one arrangement the reduction in the rate of flow of heat is by an amount related to the difference between the temperature of the object and said predetermined temperature.

Preferably the reduction in the rate of flow of heat is a function of and increases with the difference between the temperature of the object and said predetermined temperature.

In an electric hotplate arrangement the heat flow means may include an electrical resistor from which heat is transmitted to the object and the control means is operable to reduce the rate of flow of heat by chopping the electrical supply to the resistor to effect on and off periods of variable length.

Alternatively the heat flow means is a gas burner and the control means includes an electrically operated gas valve.

As a further alternative the heat flow means is refrigerant and the control means is arranged to control the rate of flow of refrigerant.

One embodiment of the invention is described, by way of example only, as applied to the control of the temperature of a pan and its contents when heated by an electric hotplate. The description is with reference to the accompanying diagrammatic drawing.

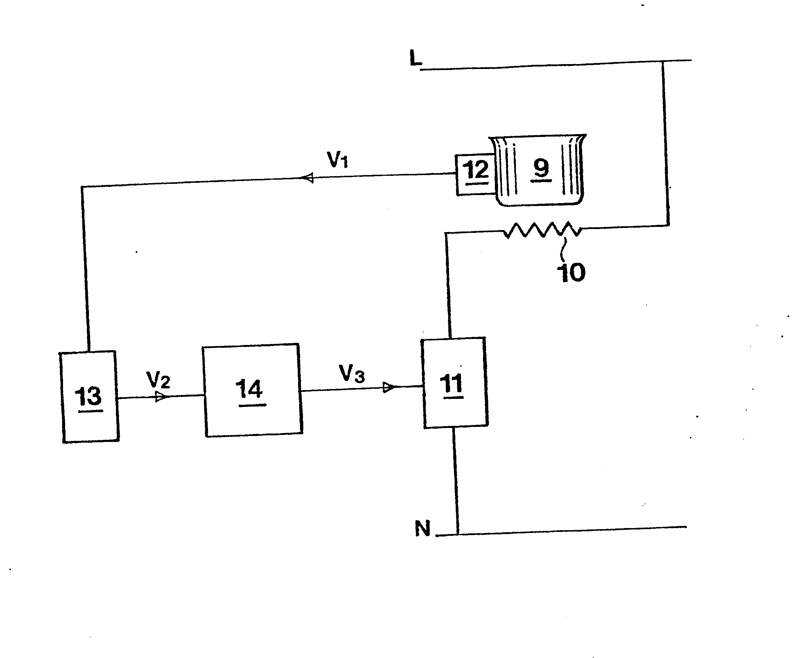

Referring to the drawing the pan 9, with its contents, is placed on a mains electric hotplate, having a resistance element 10 connected between Live and Neutral power lines L and N respectively, through a high speed switch such as a triac 11. A pan temperature sensor 12 is connected effectively to the pan 9, or its contents, so as to measure the temperature thereof, for example by being pressed against the pan base or side by a spring. The pan sensor 12 emits a voltage V1 which varies with the temperature of the pan 9 and is preferably proportional thereto.

The voltage V1 is fed to an amplifier 13 which emits a voltage V2 proportional to V1. Voltage V2 is fed into a microprocessor 14, which emits a control voltage V3 to the triac switch 11.

0190004

The system described so far can be used in a known operative mode to raise the pan 9 and its contents from a first temperature T1, which normally, but not necessarily, will be ambient temperature, to a second temperature T2, the desired temperature, which is set into the microprocessor 14. When the element 10 and the apparatus is switched on at the first temperature T1, the sensor 12 and amplifier 13 emit voltages V1, V2 of which the latter is lower than the voltage corresponding to the pre-set, desired temperature T2 in the microprocessor 14. The microprocessor 14 thus emits a control voltage V3 such that the triac 11 will conduct and pass mains power through the element 10 to heat the pan 9 and its contents. As the actual temperature T3 of the pan 9 and pan sensor 12 rises, the voltage V2 from the amplifier 13 rises correspondingly until it reaches the voltage corresponding to that at the pre-set second temperature T2, whereupon the microprocessor 14 emits a modified signal V3 which causes the triac 11 to cease conducting. Throughout the range from the first temperature T1 to the second temperature T2 the electric power supplied to the element 10 is constant, and then cuts off abruptly. When the temperature T3 of the pan 9 falls below the pre-set second temperature T2, the microprocessor 14 again changes the control voltage V3 so that the triac 11 conducts electricity. However, as mentioned above such a known mode of operation has frequently been found to be unsatisfactory.

According to the invention, to reduce variation of the temperature T3 reached by the pan relative to the pre-set second temperature T2, the microprocessor 14 is arranged to emit control signals V3 which will cause the triac 11 to modify the electrical power supplied to the element 10. This is achieved by the microprocessor 14 detecting when the voltage V2 corresponds to a temperature T4, which is the lowest temperature of a temperature band, extending by a predetermined amount, typically $10^{o}C$, above T4. The derivation of T4 is described below.

Meanwhile, the microprocessor 14 repeatedly calculates the temperature difference (T2-T3) by which the preset temperature T2 exceeds the actual pan temperature T3 and when the pan temperature T3 enters the temperature band by reaching T4, the electrical power supplied to the element 10 is reduced from a substantially constant value by an amount which is proportional to the said temperature difference T2-T3. This variable reduction in power is conveniently achieved by the microprocessor 14 emitting a chopped control voltage V3 which causes the triac 11 to switch on and off correspondingly. The ratio of successive "on" and "off" periods is adjusted by the microprocessor 14 so that the average power passing through the element 10, taken over a few successive pulses, is proportional to the required value at that time.

Thus, between T1 and T4 the power supplied to the element 10 is constant at the maximum value. As T3 rises through the temperature band from T4 to $(T4+10^{o})$ the power is progressively reduced to zero at $(T4+10^{o})$. In order to determine T4, the microprocessor 14 is arranged to make continuous calculations of the rate of change of the pan temperature T3 with time. It does this by sampling T3 regularly, such as every 10 seconds, and calculates dT3 which is the temperature rise of T3 during the 10 second period.

The microprocessor 14 calculates the value of T4, as the rate of change of T3 changes, by depressing the top of the temperature band i.e. $T4+10^{o}$ down from T2 by an amount which is proportional to d T3 at any time. T4 is depressed by the same amount.

Thus, $T4 = T2-10^{o}$ - constant A x d T3, the height of the temperature band (chosen here as $10^{o}$) and the value of the constant A are pre-set into the micro-processor 14 and can be adjusted to achieve a required period for the temperature T3 to reach the pre-set temperature T2 and also to limit the over-shoot or under-shoot of T3 relative to T2.

Other ways of modifying the electrical power through the element 10, may be used in place of chopping the signal V3. For example, the signal V3 could be used to control a variable transformer to modify the voltage applied to the element 10.

If the hotplate on which the pan is being heated is a gas hotplate, the voltage V3 can be arranged to control the opening of an electrically powered gas valve in order to provide the required variation of gas supplied to the pan 9. The gas valve could provide a continuous variation in gas flow, or could comprise an array of switched orifices or could pulse the gas flow with a variable "on" to "off" time ratio.

Clearly, the temperature control system described above is applicable to objects other than pans, for example ovens or free-standing utensils such as deep fryers or the like or, indeed, to devices other than domestic appliances.

Similarly, the same type of temperature control system can be used to control the temperature of objects subject to refrigeration where the various temperatures will be below ambient temperatures, rather than above them, and heat will be removed to a heat sink rather than supplied from a heat source. The power of the heat removed can be varied as required, by for example, pulsing the flow of refrigerant, varying the flow of refrigerant smoothly or adjusting the input temperature of the refrigerant.

Although the temperature band has been described as a pre-set fixed value of $10^{\circ}C$, it could be set as an adjustable percentage of the required temperature T2. In that case the percentages can be pre-set into the microprocessor 14 which then calculates the required value of the band height and thus of T4.

Other suitable forms of pan sensor 12 can be used in place of the direct contact type.

Claims

1. Apparatus for controlling the temperature of an object 9 comprising,

a temperature sensor 12 for sensing the temperature of the object, the sensor emitting a signal $V_1$ corresponding to the temperature of the object,

heat flow means 10 for transmitting heat to or from the object at a variable rate, and

control means 11, 13, 14 for controlling the flow of heat to or from the heat flow means 10 in response to the signal from the temperature sensor, the control means being arranged to control the flow of heat to or from the object between an initial temperature of the object and a predetermined temperature of the object,

characterised in that the control means 11, 13, 14 is arranged to reduce the rate of flow of heat to or from the object 9 as the temperature of the object approaches said predetermined temperature by reducing the rate of flow of heat from the heat flow means 10.

2. Apparatus according to claim 1 characterised in that the control means is arranged to reduce the rate of flow of heat when the temperature of the object is taken to within a selected temperature difference of said predetermined temperature.

3. Apparatus according to claim 2 wherein the selected temperature difference is an amount which depends on the rate of change of temperature of the object during flow of heat to or from the object.

4. Apparatus according to claim 1, 2 or 3 characterised in that the reduction in the rate of flow of heat is by an amount related to the difference between the temperature of the object and said predetermined temperature.

5. Apparatus according to claim 4 characterised in that the reduction in the rate of flow of heat is a function of and increases with the difference between the temperature of the object and said predetermined temperature.

6. Apparatus according to claim 1, 2 or 3 characterised in that the heat flow means 10 includes an electrical resistor 10 from which heat is transmitted to the object 9 and the control means 11, 13, 14 is operable to reduce the rate of flow of heat by chopping the electrical supply to the resistor to effect on and off periods of variable length.

7. Apparatus according to any one of the preceding claims characterised in that the heat flow means is a gas burner and the control means includes an electrically operated gas valve.

8. Apparatus according to any one of the preceding claims wherein the heat flow means is refrigerant and the control means is arranged to control the rate of flow of refrigerant.

L

$V_1$

12 9

10

13 $V_2$ 14 $V_3$ 11

N